# EUROPÄISCHE PATENTSCHRIFT

(11) **EP 3 988 253 B1**
(45) Veröffentlichungstag und Bekanntmachung des Hinweises auf die Patenterteilung: **01.05.2024**
(21) Anmeldenummer: 20203294.2
(22) Anmeldetag: 22.10.2020
(51) Int. Cl.: B25J 9/00, B25J 15/00, B25J 15/02, B25J 19/02, B25J 9/02

(54) **POSITIONIERUNGSVORRICHTUNG UND VERFAHREN ZUR POSITIONIERUNG EINES BIEGESCHLAFFEN FLÄCHENWERKSTÜCKS**
POSITIONING DEVICE AND METHOD FOR POSITIONING A FLEXIBLE WORKPIECE
DISPOSITIF DE POSITIONNEMENT ET PROCÉDÉ DE POSITIONNEMENT D'UNE PIÈCE PLATE FLEXIBLE

(43) Veröffentlichungstag der Anmeldung: 27.04.2022
(73) Patentinhaber: sewts GmbH, 80805 München (DE)
(72) Erfinder: Bley, Alexander, 80805 München (DE); Doerks, Tim, 80805 München (DE); Rickert, Till, 80805 München (DE)
(74) Vertreter: Prinz & Partner mbB

(56) Entgegenhaltungen:
- WO-A1-2020/067413
- JP-A- 2010 000 561
- JP-A- 2014 045 801
- US-A1- 2006 191 171
- US-B1- 6 477 797

## Beschreibung

Die Erfindung betrifft eine Positionierungsvorrichtung zur Positionierung eines biegeschlaffen Flächenwerkstücks.

Ferner ist die Erfindung auf ein Verfahren zur Positionierung eines biegeschlaffen Flächenwerkstücks gerichtet.

Unter einem Flächenwerkstück wird dabei ein Werkstück verstanden, das eine flächige Gestalt einnehmen kann, also beispielsweise die Form einer Matte oder einer Folie hat. Ein derartiges Werkstück ist folglich in einer seiner Dimensionen deutlich kleiner als in den beiden anderen Dimensionen.

Biegeschlaffe Werkstücke sind in diesem Zusammenhang Werkstücke, bei denen große Verformungen durch die Einwirkung von vergleichsweise geringen Kräften und/oder Momenten erreicht werden können. Biegeschlaffe Werkstücke werden auch als forminstabil oder formlabil bezeichnet.

Biegeschlaffe Flächenwerkstücke kommen in zahlreichen industriellen Anwendungsfeldern vor. Beispielhaft seien die Herstellung von Textilien, insbesondere Bekleidungstextilien, industrielle Wäschereien, die Produktion von Bezügen und Verkleidungen für Fahrzeuge und Flugzeuge sowie die Herstellung von Bauteilen aus Faserverbundwerkstoffen genannt.

Dabei besteht in den genannten Anwendungsfeldern ein weit verbreitetes Problem darin, dass die biegeschlaffen Flächenwerkstücke ausgehend von einem zufälligen, insbesondere regellos gefalteten Zustand in eine definierte Lage überführt werden müssen, um beispielsweise maschinell bearbeitet zu werden. Meist geht es dabei darum, das biegeschlaffe Flächenwerkstück in eine flächig ausgebreitete Lage zu bringen.

In zahlreichen der genannten Anwendungsfelder ist es dabei üblich, die Flächenwerkstücke manuell in eine solche definierte Lage zu überführen.

Auch automatisierte Lösungen hierfür sind bekannt. Diese beruhen meist auf dem Funktionsprinzip des mehrfachen Umgreifens. Das Flächenwerkstück wird also mehrfach, insbesondere mehr als zwei Mal, an unterschiedlichen Stellen gegriffen, um es in die gewünschte Lage zu überführen.

Die US 2006/191171 A1 offenbart eine Vorrichtung zum Ausrichten von Wäschestücken, insbesondere zum Ausrichten und Greifen einer Kante eines Wäschestücks, bei der verschiedene Greifer vorhanden sind, mit denen das Wäschestück ausgerichtet und von einem Greifer an einen nächsten übergeben werden kann.

Die WO 2020/067413 A1 offenbart eine Vorrichtung zum Falten von Objekten. Dabei weist die Vorrichtung mehrere Greifer auf, mit denen z.B. ein T-Shirt aus einem Behälter mit mehreren T-Shirts vereinzelt wird und anschließend zusammengelegt werden kann. Die Greifer werden von einer Kontrolleinheit gesteuert, die auf die Daten einer Kamera zugreift.

Vor diesem Hintergrund ist es die Aufgabe der Erfindung, eine Positionierungsvorrichtung sowie ein Verfahren zur Positionierung eines biegeschlaffen Flächenwerkstücks anzugeben, mittels denen ein biegeschlaffes Flächenwerkstück unabhängig von seinem zufälligen Ausgangszustand in einfacher, schneller und zuverlässiger Weise in den gewünschten Endzustand überführt werden kann.

Die Aufgabe wird durch eine Positionierungsvorrichtung zur Positionierung eines biegeschlaffen Flächenwerkstücks mit den Merkmalen des Anspruchs 1 gelöst.

In einer Alternative ist der zweite Greifer von einem zweiten Manipulator getragen und der dritte Greifer von einem dritten Manipulator. Beim zweiten und dritten Manipulator kann es sich um Industrieroboter handeln, die zur Handhabung des Flächenwerkstücks miteinander kooperieren.

Die Bezeichnungen "erster", "zweiter" und "dritter" Greifer sowie "erster", "zweiter" und "dritter" Manipulator dienen lediglich der eindeutigen Beschreibung und implizieren insbesondere keine Anzahl an Greifern bzw. Manipulatoren.

Zudem ist die Linearantriebseinheit, mit der in der ersten Alternative der zweite und dritte Greifer antriebsmäßig verbunden sind, vom ersten Manipulator separat.

Über den Bereitstellungsbereich lassen sich zu positionierende biegeschlaffe Flächenwerkstücke, die in einem zufälligen, insbesondere regellos gefalteten Zustand vorliegen, auf einfache Weise zur weiteren Verarbeitung bereitstellen. Von dort aus wird das zu positionierende Flächenwerkstück mittels des ersten Greifers aufgenommen, d.h. der erste Greifer greift einen Abschnitt des Flächenwerkstücks. Hierfür kann mittels der Kamera eine Kante, die vom ersten Greifer gut gegriffen werden kann, ermittelt werden, sodass dieser das Flächenwerkstück mit hoher Zuverlässigkeit und Geschwindigkeit aus dem Bereitstellungsbereich greifen kann.

Danach kann das Flächenwerkstück an den zweiten Greifer und den dritten Greifer übergeben werden. Der zweite Greifer und der dritte Greifer sind dabei insbesondere unabhängig voneinander entlang einer Bewegungsrichtung der Linearantriebseinheit verfahrbar. In der Alternative, in der der zweite Greifer und der dritte Greifer am zweiten Manipulator bzw. am dritten Manipulator gehalten sind, sind die Greifer im Wesentlichen frei im Raum verfahrbar. In beiden Alternativen lässt sich ein mittels des zweiten Greifers und des dritten Greifers gegriffenes Flächenwerkstück einfach, schnell und zuverlässig in eine flächig ausgebreitete Lage überführen.

Die Linearantriebseinheit sowie der zweite Manipulator und der dritte Manipulator sind beispielsweise auch dafür ausgebildet, das mittels des zweiten Greifers und des dritten Greifers gegriffene Flächenwerkstück in definierter Weise abzulegen und/oder in eine nachfolgende Bearbeitungsmaschine in definierter Weise einzulegen.

Die Positionierungsvorrichtung ist also insgesamt so gestaltet, dass das Flächenwerkstück innerhalb der Positionierungsvorrichtung nur ein einziges Mal übergeben werden muss. Mit anderen Worten erfolgt nur ein einziger Umgreifvorgang. Dadurch ist einerseits die Positionierungsvorrichtung einfach und kompakt im Aufbau. Andererseits lassen sich auf diese Weise Flächenwerkstücke mit hoher Geschwindigkeit von einem zufälligen Ausgangszustand in einen Zielzustand überführen, der insbesondere einem flächig ausgebreiteten Zustand entspricht. Mit anderen Worten kann eine derartige Positionierungsvorrichtung mit einer geringen Taktzeit biegeschlaffe Flächenwerkstücke in einen Zielzustand überführen.

Die Flächenwerkstücke sind z. B. Handtücher, Kopfkissen, Servietten, Bettwäsche, Inkontinenzunterlagen oder Tischdecken. Allgemeiner gesprochen handelt es sich bei den Flächenwerkstücken also um Flachwäsche oder Frotteewaren.

Vorliegend wird unter einer Kante des Flächenwerkstücks ein Rand des Flächenwerkstücks verstanden, der mit oder ohne Saum ausgeführt sein kann.

Die Linearantriebseinheit kann zusammen mit dem zweiten Greifer und dem dritten Greifer um eine parallel zu ihrer Längserstreckung verlaufende Achse rotierbar in der Positionierungsvorrichtung gelagert sein. Insbesondere ist die Linearantriebseinheit dabei an einem Rahmen oder Gestell der Positionierungsvorrichtung gelagert.

Die Linearantriebseinheit ist in einer ihrer Dimensionen deutlich größer als in den beiden anderen. Die Richtung der Längserstreckung entspricht dieser deutlich größeren Dimension. Zudem fällt die Längserstreckung mit einer Bewegungsrichtung der Linearantriebseinheit zusammen, also derjenigen Richtung entlang derer der zweite Greifer und der dritte Greifer verfahrbar sind. Die Linearantriebseinheit kann vereinfachend auch als Linearachse bezeichnet werden, da mittels ihr der zweite Greifer und der dritte Greifer linear bewegt werden können. Durch die rotierbare Lagerung der Linearantriebseinheit können somit der zweite Greifer und der dritte Greifer zum Übernehmen des Flächenwerkstücks vom ersten Greifer derart am Flächenwerkstück ausgerichtet werden, dass dieses zuverlässig gegriffen werden kann. Ferner kann die rotierbare Lagerung dafür genutzt werden, im Zuge des Ablegens des Flächenwerkstücks die Position des zweiten Greifers und des dritten Greifers an eine Ausrichtung einer Unterlage oder eines Maschinenabschnitts anzupassen, auf die bzw. auf den das Flächenwerkstück abgelegt werden soll. Das Flächenwerkstück lässt sich somit besonders präzise und zuverlässig positionieren. Darüber hinaus kann das Flächenwerkstück abgelegt werden, während sich die Linearantriebseinheit zusammen mit dem zweiten Greifer und dem dritten Greifer dreht. Daraus resultiert ein besonders sanftes und faltenfreies oder zumindest faltenarmes Ablegen des Flächenwerkstücks. Dasselbe Resultat kann selbstverständlich auch erreicht werden, wenn der zweite Greifer vom zweiten Manipulator gehalten ist und der dritte Greifer vom dritten Manipulator gehalten ist. Der zweite Manipulator und der dritte Manipulator bringen dann den zweiten Greifer und den dritten Greifer in die oben beschriebenen Orientierungen.

In einer Alternative umfasst der Bereitstellungsbereich eine Manipulationsfläche zur Bereitstellung des biegeschlaffen Flächenwerkstücks. Das Flächenwerkstück wird also in einem zufälligen Zustand auf der Manipulationsfläche bereitgestellt. In diesem Zusammenhang ist die Kamera dazu angeordnet und ausgebildet, ein Kamerabild des auf der Manipulationsfläche bereitgestellten Flächenwerkstücks zu erzeugen. Auf diese Weise werden vergleichsweise konstante Randbedingungen zum Erzeugen des Kamerabilds und zum Aufnehmen des Flächenwerkstücks mittels des ersten Greifers geschaffen. Dadurch arbeitet die Positionierungsvorrichtung mit hoher Zuverlässigkeit.

Die Positionierungsvorrichtung kann auch eine Fallstrecke für das Flächenwerkstück umfassen. Das Flächenwerkstück wird dann entlang dieser Fallstrecke fallen gelassen, bevor es auf der Manipulationsfläche bereitgestellt wird. Insbesondere fällt das Flächenwerkstück direkt auf die Manipulationsfläche. Indem das Flächenwerkstück entlang der Fallstrecke fällt, wird es zumindest zu einem gewissen Grad ausgebreitet, sodass die vom Flächenwerkstück bedeckte Fläche auf der Manipulationsfläche gegenüber einer Variante ohne Fallstrecke vergrößert ist. Dadurch lässt sich das Flächenwerkstück vergleichsweise einfach mittels des ersten Greifers aufnehmen.

In einer Variante ist die Fallstrecke zumindest abschnittsweise durch eine Belüftungseinheit begrenzt, die eine Mehrzahl an Ausströmöffnungen umfasst. Ein sich entlang der Fallstrecke bewegendes Flächenwerkstück kann sich somit entgegen eines von der Belüftungseinheit erzeugten Luftstroms bewegen. Dadurch wird das Flächenwerkstück gegenüber der Variante ohne Belüftungseinheit zumindest zu einem gewissen Grad ausgebreitet, d.h. die vom Flächenwerkstück auf der Manipulationsfläche eingenommene Fläche wird vergrößert. Dadurch lässt sich das Flächenwerkstück besonders einfach mittels des ersten Greifers aufnehmen.

In einer ersten Alternative ist die Mehrzahl an Ausströmöffnungen an einer Belüftungsfläche vorgesehen. Die Belüftungsfläche verläuft im Wesentlichen horizontal und fällt mit der Manipulationsfläche zusammen. Mit anderen Worten sind in der Manipulationsfläche Ausströmöffnungen vorgesehen, die einen Luftstrom erzeugen, der im Wesentlichen vertikal nach oben gerichtet ist. Das Flächenwerkstück fällt entgegen dieses Luftstroms auf die Manipulationsfläche. Dadurch lässt es sich mit hoher Zuverlässigkeit vom ersten Greifer aufnehmen. Zudem baut eine solche Positionierungsvorrichtung kompakt.

In einer zweiten Alternative ist die Mehrzahl an Ausströmöffnungen an einer Belüftungsfläche vorgesehen, die unter einem Winkel von weniger als 90° gegenüber einer Horizontalebene geneigt ist. Die Manipulationsfläche schließt sich an eine untere Kante der Belüftungsfläche an. Das Flächenwerkstück wird also über der Belüftungsfläche fallen gelassen und rutscht dann von der Belüftungsfläche auf die Manipulationsfläche. Auch auf diese Weise kann das Flächenwerkstück so auf der Manipulationsfläche bereitgestellt werden, dass es zuverlässig mittels des ersten Greifers aufgenommen werden kann.

Alternativ oder zusätzlich umfasst der Bereitstellungsbereich ein Bereitstellungsbehältnis, in dem eines oder mehrere biegeschlaffe Flächenwerkstücke bereitstellbar sind.

In einer ersten Variante umfasst also der Bereitstellungsbereich ein Bereitstellungsbehältnis, aber keine Manipulationsfläche. In diesem Fall greift der erste Greifer das Flächenwerkstück direkt aus dem Bereitstellungsbehältnis. Für den Fall, dass mehrere Flächenwerkstücke im Bereitstellungsbehältnis liegen, findet dabei auch eine Vereinzelung statt, d.h. es wird nur ein Flächenwerkstück aus dem Bereitstellungsbehältnis gegriffen. Die Kamera ist dazu angeordnet und ausgebildet, ein Kamerabild des Flächenwerkstücks zu erzeugen, das im Bereitstellungsbehältnis liegt. Eine Positionierungsvorrichtung gemäß dieser Variante ist strukturell einfach im Aufbau und insbesondere kompakt.

In einer zweiten Variante umfasst der Bereitstellungsbereich sowohl ein Bereitstellungsbehältnis als auch eine Manipulationsfläche. In dieser Variante wird ein zu positionierendes Flächenwerkstück zunächst vom Bereitstellungsbehältnis auf die Manipulationsfläche transferiert. In diesem Zusammenhang kann im Bereitstellungsbehältnis eine Mehrzahl an biegeschlaffen Flächenwerkstücken vorhanden sein, sodass auch eine Vereinzelung stattfinden muss. Die Kamera ist dann dazu ausgebildet und angeordnet, ein Kamerabild des auf der Manipulationsfläche vorhandenen Flächenwerkstücks zu erzeugen. Ebenso ist der erste Greifer dazu ausgebildet, das Flächenwerkstück von der Manipulationsfläche zu greifen. In dieser Variante ergeben sich dieselben Effekte und Vorteile, die bereits hinsichtlich der Manipulationsfläche erläutert wurden.

Gemäß einer Ausführungsform weist die Positionierungsvorrichtung einen Bereitstellungsmanipulator mit einem Bereitstellungsgreifer auf, wobei der Bereitstellungsmanipulator dazu ausgebildet ist, vom Bereitstellungsbehältnis bereitgestellte Flächenwerkstücke auf die Manipulationsfläche zu transferieren. Insbesondere arbeiten der Bereitstellungsmanipulator und der Bereitstellungsgreifer vollautomatisch. Dabei kann das Flächenwerkstück direkt auf die Manipulationsfläche transferiert werden. Alternativ wird es über eine bereits beschriebene Fallstrecke oder über eine Fördereinrichtung, beispielsweise ein Förderband, auf die Manipulationsfläche transferiert. In allen Varianten wird das Flächenwerkstück so bereitgestellt, dass es schnell und zuverlässig vom ersten Greifer gegriffen werden kann.

Ein Greifbackenpaar bezeichnet dabei insgesamt zwei Greifbacken, die zum Greifen des Flächenwerkstücks miteinander interagieren, also das Flächenwerkstück zwischen sich einklemmen können. Die ein Greifbackenpaar bildenden Greifbacken sind also hinsichtlich ihres Abstands variabel, um Greifoperationen ausführen zu können. Der erste Greifer umfasst zwei solcher Greifbackenpaare.

Bevorzugt sind dabei die jeweils oben liegenden und die jeweils unten liegenden Greifbacken der beiden Greifbackenpaare starr miteinander verbunden, d.h. die jeweils oberen und die jeweils unteren Greifbacken können nur gemeinsam bewegt werden. Dadurch kann für die Betätigung der beiden Greifbackenpaare lediglich ein einziger Antrieb vorgesehen werden.

Der erste Greifer ist somit strukturell einfach aufgebaut und lässt sich kostengünstig herstellen. Gleichzeitig lässt sich auf diese Weise das Flächenwerkstück zuverlässig greifen.

Ferner kann am ersten Greifer ein Sensor vorgesehen sein, der den Freiraum überwacht, um zu detektieren, ob ein Flächenwerkstück mittels des ersten Greifers gegriffen ist. Bei diesem Sensor handelt es sich vorzugsweise um einen optischen Sensor.

Der Freiraum zwischen den beiden Greifbackenpaaren verleiht dem ersten Greifer die Form einer Gabel mit zwei Zinken, wobei jede Zinke durch ein Greifbackenpaar gebildet ist.

Der Freiraum ist so dimensioniert, dass er zumindest einen Abschnitt des zweiten Greifers und zumindest einen Abschnitt des dritten Greifers aufnehmen kann, wenn der zweite Greifer und der dritte Greifer mit einem Minimalabstand und/oder in ihrer Ausgangsposition angeordnet sind. Dabei entspricht eine Ausgangsposition des zweiten Greifers und des dritten Greifers derjenigen Position der beiden Greifer, in der sie das Flächenwerkstück vom ersten Greifer übernehmen.

Insbesondere sind dabei der zweite Greifer und der dritte Greifer mittels der Linearantriebseinheit oder mittels des zweiten Manipulators und des dritten Manipulators so nahe wie möglich aneinander positioniert, d.h. mit einem Minimalabstand angeordnet.

Mit anderen Worten ist der gabelförmige erste Greifer so gestaltet, dass der zweite Greifer und der dritte Greifer zwischen die beiden Zinken der Gabel einfahren können, um das Flächenwerkstück zu übernehmen. Es ergibt sich eine besonders zuverlässige und fehlerarme Übergabe des Flächenwerkstücks vom ersten Greifer an den zweiten Greifer und den dritten Greifer.

Gemäß einer Ausführungsform ist eine Steuereinheit vorgesehen, die ein erstes Maschinenlernmodul umfasst, das dazu ausgebildet ist, ausgehend von einem von der Kamera erzeugten Kamerabild des biegeschlaffen Flächenwerkstücks eine greifbare Kante des Flächenwerkstücks zu ermitteln. Alternativ oder zusätzlich umfasst die Steuereinheit ein zweites Maschinenlernmodul, das dazu ausgebildet ist, ausgehend von einem von der Kamera erzeugten Kamerabild des biegeschlaffen Flächenwerkstücks einen Greifpunkt für den ersten Greifer festzulegen. Alternativ oder zusätzlich umfasst die Steuereinheit ein drittes Maschinenlernmodul, das dazu ausgebildet ist, ausgehend von einem von der Kamera erzeugten Kamerabild des biegeschlaffen Flächenwerkstücks einen Typ des biegeschlaffen Flächenwerkstücks zu ermitteln.

Vorzugsweise umfasst jedes der Maschinenlernmodule ein trainiertes künstliches neuronales Netzwerk. Es lassen sich so einfach und zuverlässig eine greifbare Kante des Flächenwerkstücks und/oder ein an der greifbaren Kante gelegener Greifpunkt für den ersten Greifer und/oder ein Typ des biegeschlaffen Flächenwerkstücks ermitteln.

Dabei wird der Typ des biegeschlaffen Flächenwerkstücks insbesondere aus einer Mehrzahl an vordefinierten Typen ermittelt. Wenn der Typ des Flächenwerkstücks bekannt ist, können die Ermittlung der greifbaren Kante sowie das Festlegen des Greifpunkts sowie weitere Verarbeitungsschritte auf diesen speziellen Typ ausgerichtet werden. Das Flächenwerkstück lässt sich somit mit hoher Geschwindigkeit und Zuverlässigkeit positionieren.

Für den Anwendungsfall einer Großwäscherei können die vordefinierten Typen kleine Handtücher, große Handtücher, Kopfkissen, Servietten Bettwäsche, Inkontinenzunterlagen und Tischdecken umfassen.

In einer Alternative kann die Ermittlung des Typs des Flächenwerkstücks auch lediglich dafür genutzt werden, verarbeitbare Flächenwerkstücke von nicht verarbeitbaren Flächenwerkstücken zu unterscheiden. Wird ein nicht verarbeitbarer Typ an Flächenwerkstück erkannt, so wird das zugeordnete Flächenwerkstück von der Manipulationsfläche entfernt oder das Verfahren anderweitig abgebrochen.

Alternativ oder zusätzlich umfasst die Steuereinheit ein viertes Maschinenlernmodul, das dazu ausgebildet ist, ausgehend von einem von der Kamera erzeugten Kamerabild des biegeschlaffen Flächenwerkstücks ein Material des biegeschlaffen Flächenwerkstücks zu ermitteln.

Vorzugsweise umfasst auch das vierte Maschinenlernmodul ein trainiertes künstliches neuronales Netzwerk. Es lässt sich so einfach und zuverlässig ein Material des biegeschlaffen Flächenwerkstücks ermitteln.

Dabei wird das Material des biegeschlaffen Flächenwerkstücks insbesondere aus einer Mehrzahl an vordefinierten Materialien oder Materialgruppen ermittelt. In einer Alternative kann die Ermittlung des Materials des Flächenwerkstücks auch lediglich dafür genutzt werden, Flächenwerkstücke aus einem zu verarbeitenden Material, z. B. Frottee, von nicht zu verarbeitenden Flächenwerkstücken zu unterscheiden, die z. B. aus anderen Materialien als Frottee hergestellt sind. Wird ein Flächenwerkstück aus einem nicht zu verarbeitenden Material erkannt, so wird dieses aus der Positionierungsvorrichtung entfernt oder dessen Verarbeitung anderweitig abgebrochen.

Zusätzlich wird die Aufgabe durch ein Verfahren zur Positionierung eines biegeschlaffen Flächenwerkstücks gelöst, das insbesondere mittels einer erfindungsgemäßen Positionierungsvorrichtung durchgeführt wird, wobei das Verfahren die folgenden Schritte umfasst:
a) Bereitstellen des Flächenwerkstücks in einem Bereitstellungsbereich, wobei das Flächenwerkstück einen zufälligen Zustand einnimmt,
b) Greifen einer Kante des Flächenwerkstücks mittels eines ersten Greifers,
c) Übergeben des Flächenwerkstücks vom ersten Greifer an einen zweiten Greifer und einen dritten Greifer, sodass der zweite Greifer und der dritte Greifer die Kante des Flächenwerkstücks greifen, und
d) flächiges Ablegen des Flächenwerkstücks mittels des zweiten Greifers und des dritten Greifers.

Der zufällige Zustand ist dabei insbesondere ein regellos gefalteter Zustand. Zudem versteht es sich, dass es sich bei der Kante, die vom ersten Greifer gegriffen wird, um eine greifbare Kante handeln muss. Ansonsten könnte der Greifer diese nicht greifen.

Das Flächenwerkstück kann, wie bereits im Zusammenhang mit der erfindungsgemäßen Positionierungsvorrichtung erläutert, auf einer Manipulationsfläche oder in einem Bereitstellungsbehältnis bereitgestellt werden.

Ausgehend hiervon kann somit das Flächenwerkstück unter Nutzung einer einzigen Umgreifoperation mittels des zweiten Greifers und des dritten Greifers flächig abgelegt werden. Das Verfahren umfasst somit nur wenige, die Handhabung des Flächenwerkstücks betreffende Schritte und ist dadurch einfach. Ferner kann es dadurch mit hoher Geschwindigkeit ablaufen. Bevorzugt läuft das Verfahren automatisiert ab.

Gemäß einer Variante wird ein Kamerabild durch eine Kamera erzeugt, das das im Bereitstellungsbereich vorhandene Flächenwerkstück zeigt. Das Kamerabild wird an ein erstes Maschinenlernmodul der Steuereinheit übertragen und das erste Maschinenlernmodul ermittelt die Lage der Kante des Flächenwerkstücks anhand des Kamerabilds. Dabei entspricht die ermittelte Kante derjenigen Kante, an der der erste Greifer das Flächenwerkstück greift. Um die Lage der Kante zu ermitteln, werden mittels des ersten Maschinenlernmoduls insbesondere charakteristische Bildmerkmale des Kamerabildes extrahiert. Hierzu kann das erste Maschinenlernmodul ein trainiertes künstliches neuronales Netzwerk aufweisen. Dieses erhält zum Extrahieren charakteristischer Bildmerkmale das Kamerabild oder Teilbilder des Kamerabilds. Somit lässt sich eine Lage der Kante des Flächenwerkstücks vergleichsweise schnell und mit hoher Zuverlässigkeit ermitteln.

Zur Ermittlung der Lage der Kante kann das Kamerabild in eine Mehrzahl an Teilbildern unterteilt werden. Dies erfolgt insbesondere durch die Steuereinheit. Für jedes Teilbild werden durch das erste Maschinenlernmodul der Steuereinheit charakteristische Bildmerkmale extrahiert und anhand der charakteristischen Bildmerkmale wird für jedes Teilbild eine Wahrscheinlichkeit ermittelt, mit der es eine Kante des Flächenwerkstücks zeigt. Insbesondere werden für jedes Teilbild Wahrscheinlichkeiten ermittelt, mit denen es einer von mehreren vordefinierten Kategorien angehört. Das erste Maschinenlernmodul kann somit auch als Bildverarbeitungseinheit bezeichnet werden. Das Extrahieren der charakteristischen Bildmerkmale mit einem solchen Maschinenlernmodul erfolgt schnell und zuverlässig. Somit kann schnell und zuverlässig eine greifbare Kante ermittelt werden.

Für den Anwendungsfall einer Textilwäscherei können in diesem Zusammenhang die folgenden Kategorien verwendet werden: "keine Kante", "greifbare Kante", "ungreifbare Kante". Es werden also für jedes Teilbild die Wahrscheinlichkeiten ermittelt, mit denen es zu den vorgenannten Kategorien gehört. Eine greifbare Kante gilt dann als ermittelt, wenn das Teilbild mit der relativ gesehen höchsten Wahrscheinlichkeit in der Kategorie "greifbare Kante" gefunden ist.

Das verwendete künstliche neuronale Netzwerk umfasst beispielsweise zwischen 10 und 180 Schichten. Besonders vorteilhaft sind dabei 34, 56 oder 152 Schichten.

Das Kamerabild oder zumindest ein Teilbild des Kamerabilds kann an ein zweites Maschinenlernmodul der Steuereinheit übertragen werden. Das zweite Maschinenlernmodul ermittelt dann anhand des Kamerabilds oder des Teilbilds des Kamerabilds einen Greifpunkt für den ersten Greifer. Bevorzugt wird dabei der Greifpunkt für den ersten Greifer in einem Abschnitt des Flächenwerkstücks festgelegt, für dessen Abbildung im Kamerabild oder in einem zugeordneten Teilbild mittels des ersten Maschinenlernmoduls die relativ höchste Wahrscheinlichkeit ermittelt wurde, dass das Kamerabild oder das Teilbild eine Kante zeigt.

Zur Ermittlung des Greifpunkts werden wieder charakteristische Bildmerkmale des Kamerabilds oder des Teilbilds extrahiert, wobei anhand der charakteristischen Bildmerkmale für den ersten Greifer Greifkoordinaten und eine Greiforientierung errechnet werden. Das zweite Maschinenlernmodul kann hierzu ein trainiertes künstliches neuronales Netzwerk aufweisen. Der Greifpunkt kann zunächst in Bildkoordinaten errechnet und dann in die zum ersten Greifer gehörenden Maschinenkoordinaten transformiert werden. Es lässt sich auf diese Weise schnell und zuverlässig ein Greifpunkt für den ersten Greifer ermitteln.

Das im zweiten Maschinenlernmodul verwendete künstliche neuronale Netzwerk umfasst ebenfalls z. B. zwischen 10 und 180 Schichten.

In einer Ausführungsform greifen der zweite Greifer und der dritte Greifer im Wesentlichen gleichzeitig einen in einem Freiraum zwischen zwei Greifbackenpaaren des ersten Greifers liegenden Abschnitt der Kante, um das Flächenwerkstück vom ersten Greifer an den zweiten Greifer und den dritten Greifer zu übergeben. Der im Freiraum des ersten Greifers liegende Abschnitt der Kante kann daher mit besonders hoher Zuverlässigkeit gegriffen werden.

Nach dem Übergeben des Flächenwerkstücks an den zweiten Greifer und den dritten Greifer ist es möglich, dass das Flächenwerkstück mit dem zweiten Greifer gehalten wird und der dritte Greifer vom zweiten Greifer wegbewegt wird bis der dritte Greifer an einer ersten Ecke des Flächenwerkstücks angelangt ist. Alternativ ist es möglich, dass nach dem Übergeben des Flächenwerkstücks an den zweiten Greifer und den dritten Greifer das Flächenwerkstück mit dem dritten Greifer gehalten wird und der zweite Greifer vom dritten Greifer wegbewegt wird bis der zweite Greifer an einer zweiten Ecke des Flächenwerkstücks angelangt ist. Gemäß einer weiteren Alternative ist es möglich, dass nach dem Übergeben des Flächenwerkstücks an den zweiten Greifer und den dritten Greifer der zweite Greifer und der dritte Greifer gleichzeitig voneinander wegbewegt werden bis der dritte Greifer an einer ersten Ecke des Flächenwerkstücks angelangt ist und der zweite Greifer an einer zweiten Ecke des Flächenwerkstücks angelangt ist. Es führt somit wenigstens einer aus dem zweiten Greifer und dem dritten Greifer eine Relativbewegung gegenüber dem Flächenwerkstück aus. Dabei ist es auch möglich, dass sich sowohl der zweite Greifer als auch der dritte Greifer relativ zum Flächenwerkstück bewegen. In allen Varianten entfernen sich der zweite Greifer und der dritte Greifer voneinander entlang der Bewegungsrichtung der Linearantriebseinheit. In einer vereinfachten Vorstellung fährt einer aus dem zweiten und dritten Greifer oder beide Greifer an der Kante des Flächenwerkstücks entlang bis zu einer Ecke. Dabei muss natürlich berücksichtigt werden, dass die eigentliche Bewegung des zweiten und/oder dritten Greifers durch die Linearantriebseinheit vorgegeben wird und sich die Kante entsprechend verformt. Auf diese Weise kann das Flächenwerkstück einfach und zuverlässig in einen flächig ausgebreiteten Zustand überführt werden.

Gemäß einer Variante wird zum Wegbewegen des zweiten Greifers vom dritten Greifer und/oder zum Wegebewegen des dritten Greifers vom zweiten Greifer eine Greifkraft des zweiten Greifers und/oder des dritten Greifers im Vergleich zu einem vordefinierten Ausgangsgreifzustand reduziert. Alternativ oder zusätzlich wird bzw. werden zum Wegbewegen des zweiten Greifers vom dritten Greifer und/oder zum Wegbewegen des dritten Greifers vom zweiten Greifer der zweite Greifer und/oder der dritte Greifer um einen vorgegebenen Betrag geöffnet. Stets wird das Flächenwerkstück so fest vom zweiten Greifer und vom dritten Greifer gegriffen, dass es vom jeweiligen Greifer zuverlässig gehalten wird.

Mit anderen Worten wird verhindert, dass sich das Flächenwerkstück vom zweiten Greifer und vom dritten Greifer trennt, indem es beispielsweise aus diesem herausrutscht. Gleichzeitig wird das Flächenwerkstück jedoch vom zweiten Greifer und/oder vom dritten Greifen nur so fest gegriffen, dass eine von der Linearantriebseinheit in einen oder beide Greifer eingebrachte Antriebsbewegung zu einer Relativbewegung zwischen dem zweiten Greifer und/oder dem dritten Greifer und dem gegriffenen Flächenwerkstück führen kann. Das Flächenwerkstück kann also durch den jeweiligen Greifer hindurchgleiten, ohne dass es herausfällt.

Für den Fall, dass das Flächenwerkstück auf einer Manipulationsfläche bereitgestellt wird, kann vor dem Erzeugen des Kamerabildes eine Auflagefläche des Flächenwerkstücks auf der Manipulationsfläche ausgehend vom zufälligen Zustand vergrößert werden, insbesondere indem das Flächenwerkstück relativ zu einem Luftstrom bewegt wird, wie bereits im Zusammenhang mit der erfindungsgemäßen Positionierungsvorrichtung erläutert wurde. Auf diese Weise lässt sich das Flächenwerkstück noch einfacher mittels des ersten Greifers greifen.

Gemäß einer Alternative kann vor dem Ermitteln der greifbaren Kante mittels eines dritten Maschinenlernmoduls der Steuereinheit ein Typ des Flächenwerkstücks ermittelt werden, insbesondere wobei aus einer Mehrzahl an vordefinierten Typen der Typ des Flächenwerkstücks ermittelt wird. Es ergeben sich die bereits im Zusammenhang mit der Positionierung Vorrichtung erläuterten Effekte und Vorteile.

In diesem Zusammenhang kann das dritte Maschinenlernmodul ein trainiertes künstliches neuronales Netzwerk aufweisen, das zum Extrahieren charakteristischer Bildmerkmale das Kamerabild oder Teilbilder des Kamerabilds erhält.

Alle zuvor beschriebenen künstlichen neuronalen Netzwerke sind beispielsweise mit frei verfügbaren Datensätzen trainiert, in denen Bilder bzw. Teilbilder entsprechend der Aufgabe des künstlichen neuronalen Netzwerks annotiert wurden. Die für Trainingszwecke verwendeten Bilder oder Teilbilder entstammen also freien Quellen. Sie wurden zusätzlich den für die Lösung der Aufgabe des jeweiligen künstlichen neuronalen Netzwerks vordefinierten Kategorien zugeordnet. Insbesondere kann dafür ein Datensatz des Projekts ImageNet der Stanford und Princeton University (erhältlich unter www.imagenet.org) verwendet werden. Alternativ oder zusätzlich ist es möglich, die neuronalen Netzwerke beispielsweise mit 1000 bis 5000 Bildern je Klasse, das heißt je zu erkennendem Typ oder Kategorie zu trainieren. Optional werden die mittels frei verfügbaren Datensätzen trainierten künstlichen neuronalen Netzwerke mit Hilfe von proprietären Datensätzen nachtrainiert.

Alle künstlichen neuronalen Netzwerke können dabei Convolutional Neural Networks sein. Ein Convolutional Neural Network ist besonders gut für die zuvor beschriebenen Aufgaben geeignet. Die Architektur der künstlichen neuronalen Netzwerke basiert dabei auf der im Artikel "Deep Residual Learning for Image Recognition" von K. He, X. Zhang, S. Ren und J. Sun beschriebenen Architektur, die im Rahmen der IEEE Conference on Computer Vision and Pattern Recognition 2016 veröffentlicht wurde. Dabei wurde stets die letzte Schicht des künstlichen neuronalen Netzwerks jeweils an die spezifische Aufgabe angepasst.

Im Übrigen gelten die bereits hinsichtlich der erfindungsgemäßen Positionierungsvorrichtung erläuterten Effekte und Vorteile auch für das erfindungsgemäße Verfahren und umgekehrt.

Die Erfindung wird nachstehend anhand verschiedener Ausführungsbeispiele erläutert, die in den beigefügten Zeichnungen gezeigt sind. Es zeigen:
- Figur 1 eine erfindungsgemäße Positionierungsvorrichtung gemäß einer ersten Ausführungsform, mittels der ein erfindungsgemäßes Verfahren zur Positionierung eines biegeschlaffen Flächenwerkstücks ausführbar ist, sowie eine Weiterverarbeitungsmaschine und ein zu positionierendes Flächenwerkstück,
- Figur 2 einen ersten Greifer der Positionierungsvorrichtung aus Figur 1 in einer isolierten, perspektivischen Darstellung,
- Figur 3 den ersten Greifer aus Figur 2 in einer Ansicht von oben,
- Figur 4 den ersten Greifer aus Figur 2 in einer Seitenansicht,
- Figur 5 den ersten Greifer aus den Figuren 2 bis 4 in einer der Figur 4 entsprechenden Seitenansicht, wobei der erste Greifer geöffnet ist,
- Figur 6 eine Handhabungsbaugruppe der Positionierungsvorrichtung aus Figur 1, die einen zweiten Greifer und einen dritten Greifer umfasst, in einer isolierten Darstellung, wobei vom zweiten Greifer und vom dritten Greifer das Flächenwerkstück gegriffen ist,
- Figur 7 die Handhabungsbaugruppe aus Figur 6, wobei der zweite Greifer und der dritte Greifer jeweils eine andere Position einnehmen und wobei weiterhin vom zweiten Greifer und vom dritten Greifer das Flächenwerkstück gegriffen ist,
- Figur 8 die Handhabungsbaugruppe und das Flächenwerkstück aus Figur 7 in einer perspektivischen Darstellung,
- Figur 9 eine Alternative zur Handhabungsbaugruppe aus den Figuren 6 bis 8, wobei das Flächenstück wieder gegriffen ist,
- Figur 10 eine erfindungsgemäße Positionierungsvorrichtung gemäß einer zweiten Ausführungsform, mittels der ein erfindungsgemäßes Verfahren zur Positionierung eines biegeschlaffen Flächenwerkstücks ausführbar ist, sowie eine Weiterverarbeitungsmaschine und ein zu positionierendes Flächenwerkstück,
- Figur 11 eine erfindungsgemäße Positionierungsvorrichtung gemäß einer dritten Ausführungsform, mittels der ein erfindungsgemäßes Verfahren zur Positionierung eines biegeschlaffen Flächenwerkstücks ausführbar ist, sowie eine Weiterverarbeitungsmaschine und zwei zu positionierende Flächenwerkstücke,
- Figur 12 eine Prinzipskizze zur Illustration der Erfindung, und
- Figur 13 eine weitere Prinzipskizze zur Illustration der Erfindung.

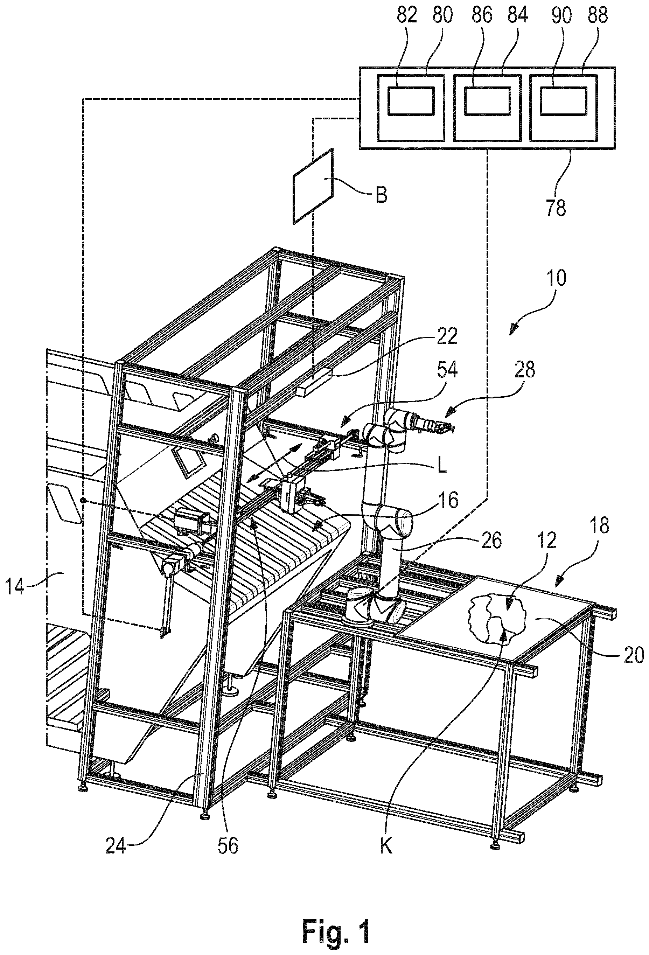

Figur 1 zeigt eine Positionierungsvorrichtung 10 zur Positionierung eines biegeschlaffen Flächenwerkstücks 12.

In der dargestellten Ausführungsform ist die Positionierungsvorrichtung 10 dazu ausgebildet, das biegeschlaffe Flächenwerkstück 12, das in einem zufälligen Zustand bereitgestellt wird, in einem flächig ausgebreiteten Zustand in eine Weiterverarbeitungsmaschine 14 einzulegen. Genauer gesagt wird das biegeschlaffe Flächenwerkstück 12 in einem flächig ausgebreiteten Zustand auf das mehrere Förderriemen umfassende Förderband 16 aufgelegt.

Das biegeschlaffe Flächenwerkstück 12 ist beispielsweise ein Handtuch.

Die Positionierungsvorrichtung 10 umfasst einen Bereitstellungsbereich 18, der in der ersten Ausführungsform gemäß Figur 1 eine Manipulationsfläche 20 zur Bereitstellung des biegeschlaffen Flächenwerkstücks 12 umfasst.

Ferner weist die Positionierungsvorrichtung 10 eine Kamera 22 auf, die innerhalb der Positionierungsvorrichtung 10 so positioniert und dazu ausgebildet ist, dass sie ein Kamerabild B des im Bereitstellungsbereich 18, genauer gesagt auf der Manipulationsfläche 20, bereitgestellten Flächenwerkstücks 12 erzeugen kann.

Vorliegend ist die Kamera 22 in einem Bereich eines Gestells 24 der Positionierungsvorrichtung 10 befestigt, der in Vertikalrichtung oberhalb der Manipulationsfläche 20 liegt. Die Manipulationsfläche 20 liegt vollständig im Erfassungsfeld der Kamera 22.

Die Positionierungsvorrichtung 10 umfasst ferner einen ersten Manipulator 26, der in der dargestellten Ausführungsform als Industrieroboter ausgeführt ist.

Der erste Manipulator 26 trägt einen ersten Greifer 28.

Dieser ist dazu ausgebildet, einen Abschnitt des biegeschlaffen Flächenwerkstücks 12, das im Bereitstellungsbereich 18 liegt, zu greifen.

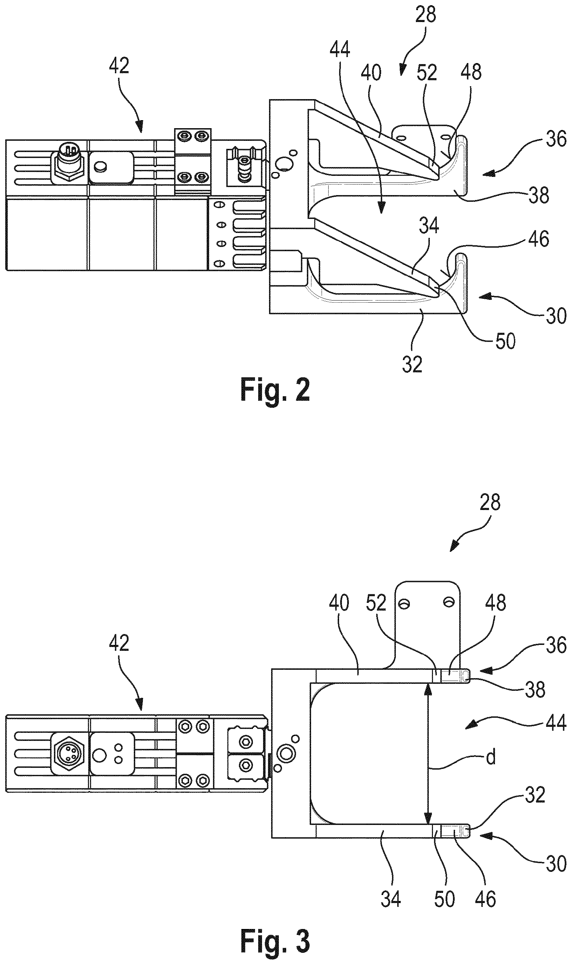

Der erste Greifer 28 ist in den Figuren 2 bis 5 im Detail dargestellt.

Er umfasst ein erstes Greifbackenpaar 30, das eine untere Greifbacke 32 und eine obere Greifbacke 34 aufweist.

Ferner ist der erste Greifer 28 mit einem zweiten Greifbackenpaar 36 ausgestattet.

Dieses umfasst ebenfalls eine untere Greifbacke 38 und eine obere Greifbacke 40.

Es versteht sich dabei, dass der Greifer 28 aufgrund der Tatsache, dass er am ersten Manipulator 26 befestigt ist, nahezu beliebige Ausrichtungen im Raum einnehmen kann. Die Angaben "obere" und "untere" dienen somit lediglich der einfacheren Bezeichnung der Greifbacken 32, 34, 38, 40 und beziehen sich im Wesentlichen auf die in Figur 2 dargestellte Ausrichtung des ersten Greifers 28.

Die unteren Greifbacken 32, 38 sind starr miteinander verbunden.

Ebenfalls sind die oberen Greifbacken 34, 40 starr miteinander verbunden.

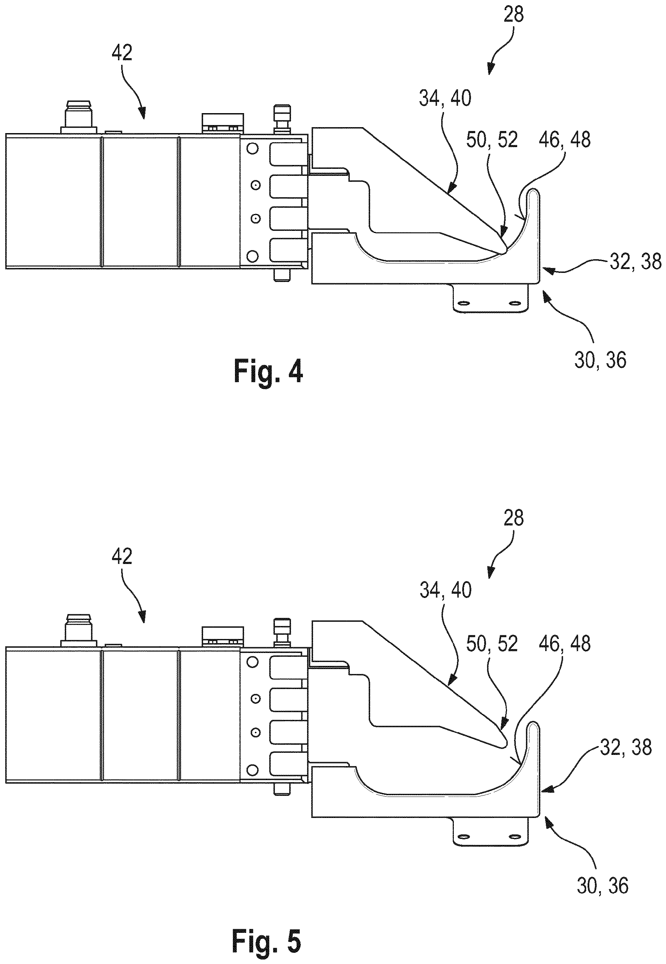

Der erste Greifer 28 umfasst zudem einen Aktor 42, der dazu ausgebildet ist, die oberen Greifbacken 34, 40 wahlweise von den jeweils zugeordneten unteren Greifbacken 32, 38 abzuheben oder die oberen Greifbacken 34, 40 an die unteren Greifbacken 32, 38 anzunähern (siehe insbesondere Figuren 4 und 5 im Vergleich).

Zwischen den Greifbackenpaaren 30, 36 ist ferner ein Freiraum 44 vorgesehen (siehe insbesondere Figur 3). Die Greifbackenpaare 30, 36 haben also einen Abstand d voneinander.

Zur einfachen Aufnahme des Flächenwerkstücks 12 sind außerdem die jeweils unteren Greifbacken 32, 38 jeweils im Bereich ihrer Spitze mit einer bogenförmigen Aufnahmefläche 46, 48 ausgestattet

Die oberen Greifbacken 34, 40 weisen jeweils eine Haltespitze 50, 52 zum Andrücken des Flächenwerkstücks 12 an die unteren Greifbacken 32, 38 auf. Insbesondere wird das Flächenwerkstück 12 an die Aufnahmeflächen 46, 48 angedrückt.

Die Positionierungsvorrichtung 10 umfasst ferner eine Handhabungsbaugruppe 54.

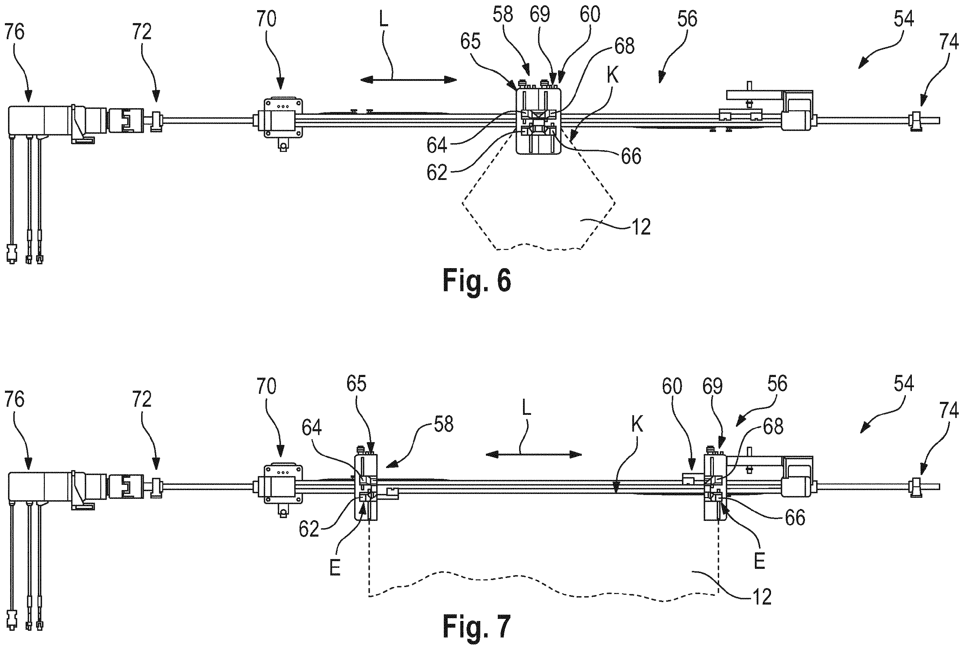

Die Handhabungsbaugruppe 54 ist in den Figuren 6 bis 8 im Detail dargestellt.

Sie umfasst eine Linearantriebseinheit 56, sowie einen zweiten Greifer 58 und einen dritten Greifer 60.

Dabei sind der zweite Greifer 58 und der dritte Greifer 60 antriebsmäßig mit der Linearantriebseinheit 56 gekoppelt, sodass der zweite Greifer 58 und der dritte Greifer 60 jeweils entlang einer Bewegungsrichtung L der Linearantriebseinheit 56 verfahrbar sind.

Die antriebsmäßige Kopplung der Greifer 58, 60 mit der Linearantriebseinheit 56 ist dabei so gestaltet, dass der zweite Greifer 58 und der dritte Greifer 60 nur abhängig voneinander verfahren werden können. Mit anderen Worten wird der dritte Greifer 60 verfahren, wenn der zweite Greifer 58 verfahren wird und umgekehrt.

Ferner sind der zweite Greifer 58 und der dritte Greifer 60 jeweils dazu ausgebildet, ein Abschnitt des biegeschlaffen Flächenwerkstücks 12 vom ersten Greifer 28 zu übernehmen.

Hierfür weist der zweite Greifer 58 ein Greifbackenpaar auf, das eine erste Greifbacke 62 und eine zweite Greifbacke 64 umfasst.

Die erste Greifbacke 62 und die zweite Greifbacke 64 können mittels eines Aktors 65 relativ zueinander bewegt werden, um das Flächenwerkstück 12 wahlweise zwischen sich festzuklemmen oder freizugeben.

Der dritte Greifer 60 umfasst ebenfalls ein Greifbackenpaar mit einer ersten Greifbacke 66 und einer zweiten Greifbacken 68.

Dabei können die erste Greifbacke 66 und die zweite Greifbacke 68 mittels eines Aktors 69 relativ zueinander bewegt werden, um das Flächenwerkstück 12 wahlweise zwischen sich festzuklemmen oder freizugeben.

Zum Verfahren des zweiten Greifers 58 und des dritten Greifers 60 entlang der Bewegungsrichtung L ist ein Aktor 70 vorgesehen.

Die Handhabungsbaugruppe 54 ist zudem drehbar am Gestell 24 gelagert.

Dabei ist eine Rotationsachse parallel zur Längserstreckung der Handhabungsbaugruppe 54 orientiert. Die Rotationsachse ist also auch parallel zur Bewegungsrichtung L, die der Längserstreckung entspricht.

Zu diesem Zweck ist die Handhabungsbaugruppe über ein erstes Rotationslager 72 und ein zweites Rotationslager 74 am Gestell 24 gelagert.

Ferner ist ein Rotationsantrieb 76 vorgesehen, mit dem die Handhabungsbaugruppe 54 relativ zum Gestell 24 gedreht werden kann.

Der zweite Greifer 58 und der dritte Greifer 60 können hinsichtlich ihres Abstands und hinsichtlich ihrer Drehposition, die aus der Drehposition der Handhabungsbaugruppe 54 resultiert, eine Ausgangsposition einnehmen, in der die Greifer 58, 60 mit einem vergleichsweise geringen Abstand, insbesondere einem Minimalabstand, zueinander positioniert sind (siehe insbesondere Figur 6).

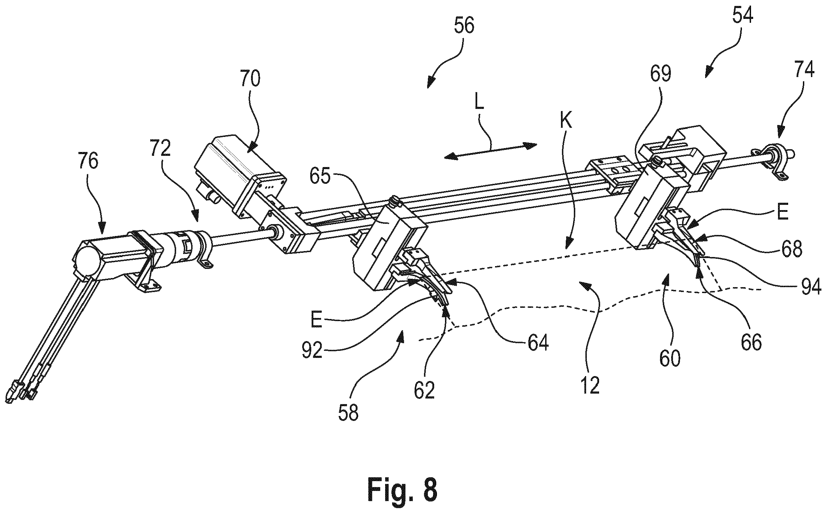

Ausgehend hiervon können der zweite Greifer 58 und der dritte Greifer 60 voneinander weg bewegt werden und so in eine aufgefahrene Position überführt werden (siehe Figuren 7 und 8).

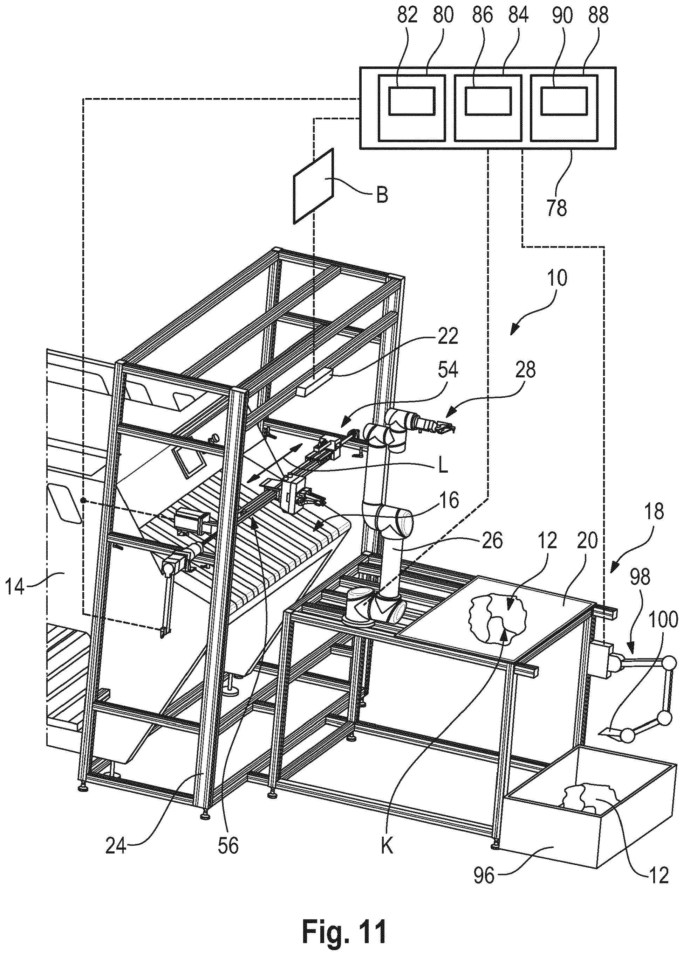

Dabei ist die Ausgangsposition des zweiten Greifers 58 und des dritten Greifers 60 so auf den ersten Greifer 28 abgestimmt, dass der zweite Greifer 58 und der dritte Greifer 60 in dieser Ausgangsposition zumindest abschnittsweise in den Freiraum 44 des ersten Greifers 28 einfahren können (siehe auch Figur 11).

Mit anderen Worten ist der Freiraum 44 so dimensioniert, dass er zumindest einen Abschnitt des zweiten Greifers 58 und des dritten Greifers 60 aufnehmen kann, wenn sich diese in der Ausgangsposition befinden.

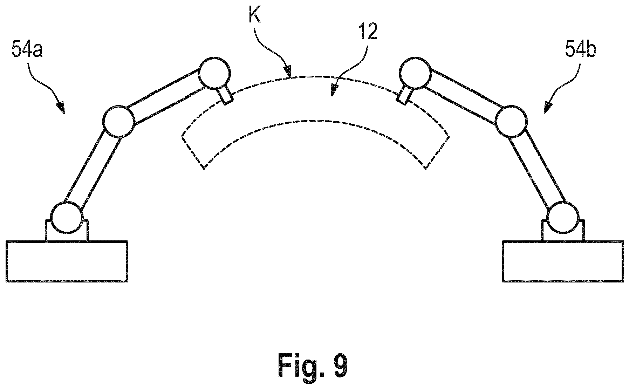

Alternativ zur Handhabungsbaugruppe 54 kann die Positionierungsvorrichtung 10 einen zweiten Manipulator 54a und einen dritten Manipulator 54b umfassen, wobei der zweite Manipulator 54a den zweiten Greifer 58 trägt und der dritte Manipulator 54b den dritten Greifer 60 trägt (siehe Figur 9).

Die Manipulatoren 54a, 54b sind vorliegend als zwei unabhängige, jedoch miteinander zur Handhabung des Flächenwerkstücks 12 kooperierende Industrieroboter ausgeführt.

Nachdem die Greifer 58, 60 mittels der Manipulatoren 54a, 54b im Wesentlichen frei im Raum positioniert und orientiert werden können, sind diese im Unterschied zur Handhabungsbaugruppe 54 nicht drehbar gelagert.

Im Übrigen kann auf die Erläuterungen zur Handhabungsbaugruppe 54 verwiesen werden, die für die Alternative mit dem zweiten Manipulator 54a und dem dritten Manipulator 54b in analoger Weise gelten.

Insbesondere sind die Greifer 58, 60 identisch zur die Handhabungsbaugruppe 54 umfassenden Alternative ausgeführt.

Zum Betrieb der Positionierungsvorrichtung 10 ist zudem eine Steuereinheit 78 vorgesehen (siehe Figur 1).

Diese umfasst ein erstes Maschinenlernmodul 80, das dazu ausgebildet ist, ausgehend vom von der Kamera 22 erzeugten Kamerabild B des biegeschlaffen Flächenwerkstücks 12 eine greifbare Kante K des Flächenwerkstücks 12 zu ermitteln.

Hierzu ist das erste Maschinenlernmodul mit einem trainierten künstlichen neuronalen Netzwerk 82 ausgestattet.

Ferner ist ein zweites Maschinenlernmodul 84 vorgesehen, das dazu ausgebildet ist, ausgehend vom von der Kamera 22 erzeugten Kamerabild B des biegeschlaffen Flächenwerkstücks 12 einen Greifpunkt für den ersten Greifer 28 festzulegen. Der Greifpunkt beinhaltet dabei eine Greiferposition sowie eine Greiferorientierung des ersten Greifers 28 und liegt insbesondere im Bereich der greifbaren Kante K.

Auch das zweite Maschinenlernmodul 84 ist mit einem trainierten künstlichen neuronalen Netzwerk 86 ausgestattet.

Darüber hinaus ist ein drittes Maschinenlernmodul 88 vorgesehen, das dazu ausgebildet ist, ausgehend vom von der Kamera 22 erzeugten Kamerabild B des biegeschlaffen Flächenwerkstücks 12 einen Typ des biegeschlaffen Flächenwerkstücks 12 zu ermitteln.

Das dritte Maschinenlernmodul 88 umfasst ebenso ein trainiertes künstliches neuronales Netzwerk 90.

Es versteht sich, dass die Steuereinheit 78 zumindest indirekt mit jedem Aktor und jedem Sensor der Positionierungsvorrichtung 10 gekoppelt sein muss. In der Figur 1 sind dabei aus Gründen der besseren Übersichtlichkeit lediglich in exemplarischer Weise einige dieser Kopplungen durch gestrichelte Linien eingezeichnet.

Die Funktionalität der Steuereinheit 78 sowie der Positionierungsvorrichtung 10 als Ganzes wird im Folgenden gemeinsam mit einem Verfahren zum Positionieren des biegeschlaffen Flächenwerkstücks 12 erläutert.

Ziel des Verfahrens ist es, das biegeschlafe Flächenwerkstück 12 ausgehend von einem zufälligen, insbesondere regellos gefalteten, Zustand in einen flächig aufgespannten Zustand zu überführen und in die Weiterverarbeitungsmaschine 14 einzulegen.

Dabei wird zunächst das Flächenwerkstück 12 in seinem zufälligen Zustand auf der Manipulationsfläche 20 bereitgestellt.

In diesem Zustand wird durch die Kamera 22 ein Kamerabild B des Flächenwerkstücks 12 erzeugt und an die Steuereinheit 78 übertragen.

Das Kamerabild B wird dann durch die Steuereinheit 78 in Teilbilder unterteilt.

Diese werden an das erste Maschinenlernmodul 80, insbesondere an das zugehörige künstliche neuronale Netzwerk 82, übertragen. Dieses ermittelt durch Extraktion charakteristischer Bildmerkmale für jedes Teilbild eine Wahrscheinlichkeit, mit der es eine greifbare Kante K des Flächenwerkstücks 12 zeigt.

Genauer gesagt wird für jedes Teilbild eine Wahrscheinlichkeit ermittelt, mit der es zu einer der Kategorien "keine Kante", "greifbare Kante" und "ungreifbare Kante" gehört. Eine greifbare Kante K gilt dann als ermittelt, wenn das Teilbild mit der relativ gesehen höchsten Wahrscheinlichkeit der Kategorie "greifbare Kante" gefunden ist.

Auf diese Weise kann mittels des ersten Maschinenlernmoduls 80 die Lage einer greifbaren Kante K des Flächenwerkstücks 12 ermittelt werden.

Zumindest das die Kante K zeigende Teilbild des Kamerabild B wird darüber hinaus an das zweite Maschinenlernmodul 84 übertragen.

Das zweite Maschinenlernmodul ermittelt durch Extraktion charakteristischer Bildmerkmale zumindest dieses Teilbilds mittels des künstlichen neuronalen Netzwerks 86 einen Greifpunkt für den ersten Greifer 28, der an der mittels des ersten Maschinenlernmoduls 80 ermittelten Kante K liegt.

Optional wird das Kamerabild B auch an das dritte Maschinenlernmodul 88 übermittelt. Das von diesem Maschinenlernmodul 88 umfasste künstliche neuronale Netzwerk 90 kann durch die Extraktion charakteristischer Bildmerkmale einen Typ des Flächenwerkstücks ermitteln. Auf diese Weise können beispielsweise Flächenwerkstücke 12 identifiziert und aus dem Bereitstellungsbereich 18 eliminiert werden, die nicht einem vorgegebenen Typ entsprechen.

Im vorliegenden Beispiel können somit Flächenwerkstücke 12, die keine Handtücher sind, erfasst und von der Verarbeitung ausgeschlossen werden.

Darauf folgend wird die ermittelte greifbare Kante K des Flächenwerkstücks 12 mittels des ersten Greifers 28 gegriffen.

Dafür werden die die bogenförmigen Aufnahmeflächen 46, 48 umfassenden, jeweils unteren Greifbacken 32, 38 in einer Schwenkbewegung des ersten Greifers 28 unter die zu greifende Kante K geführt. In der aus dieser Bewegung resultierenden Position wird das Flächenwerkstück 12 dann durch Zufahren des Greifers 28, d.h. durch Annähern der jeweils oberen Greifbacken 34, 40 an die unteren Greifbacken 32, 38 gegriffen.

Das Flächenwerkstück 12, genauer gesagt der zwischen den beiden Greifbackenpaaren 30, 36 liegende Abschnitt der greifbaren Kante K wird dann an den zweiten Greifer 58 und den dritten Greifer 60 übergeben, die hierfür ihre Ausgangsposition einnehmen (siehe Figur 6).

Für den Fall, dass die Positionierungsvorrichtung 10 anstelle der Handhabungsbaugruppe 54 den zweiten Manipulator 54a und den dritten Manipulator 54b umfasst, die den zweiten Greifer 58 bzw. den dritten Greifer 60 tragen, werden der zweite Greifer 58 und der dritte Greifer 60 mittels der Manipulatoren 54a, 54b in eine Stellung überführt, die der in Figur 6 dargestellten entspricht.

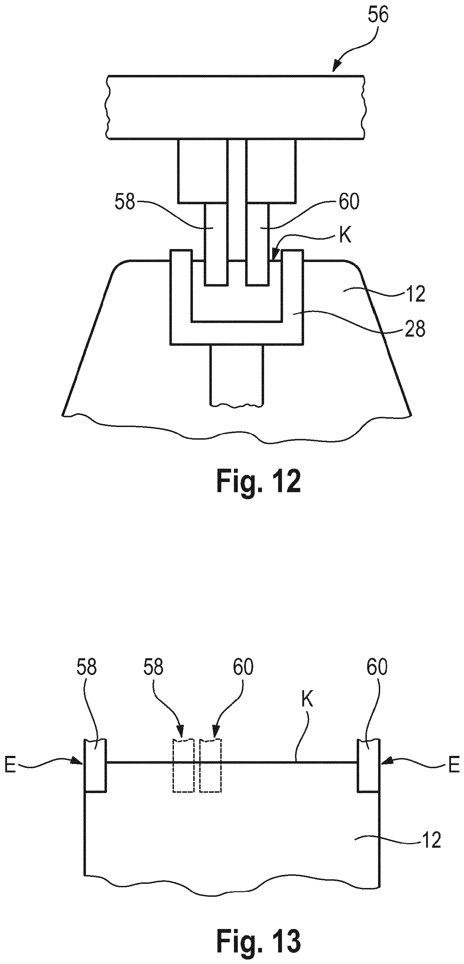

Der erste Greifer 28 wird dabei unter Nutzung des ersten Manipulators 26 zusammen mit dem gegriffenen Flächenwerkstück 12 derart gegenüber dem zweiten Greifer 58 und dem dritten Greifer 60 positioniert, dass der zweite Greifer 58 und der dritte Greifer 60 im Wesentlichen gleichzeitig in den Freiraum 44 zwischen den Greifbackenpaaren 30, 36 eingreifen (siehe Figur 12).

Danach wird der erste Greifer 28 mittels des ersten Manipulators 26 in eine von der Handhabungsbaugruppe 54 beabstandete Position verfahren.

Nun gilt es, das Flächenwerkstück 12 in eine flächig aufgespannte Position zu überführen.

Hierfür wird sowohl beim zweiten Greifer 58 als auch beim dritten Greifer 60 im Vergleich zu einem Ausgangsgreifzustand, der demjenigen Greifzustand entspricht, in dem diese beiden Greifer 58, 60 das Flächenwerkstück 12 vom ersten Greifer 28 übernommen haben, eine Greifkraft reduziert.

Dabei ist die reduzierte Greifkraft ausreichend groß, um das Flächenwerkstück 12 weiterhin mittels des zweiten Greifers 58 und mittels des dritten Greifers 60 zu halten. Das Flächenwerkstück 12 kann also nicht aus diesen Greifern 58, 60 herausrutschen.

Gleichzeitig ist die Greifkraft jedoch ausreichend klein, sodass eine Relativbewegung zwischen dem Flächenwerkstück 12 und den Greifern 58, 60 entlang der Richtung L möglich ist.

In diesem Zusammenhang werden sowohl der zweite Greifer 58 als auch der dritte Greifer 60 so weit nach außen gefahren, bis beide Greifer 58, 60 an einer jeweils zugeordneten Ecke E des Flächenwerkstücks 12 angelangen (siehe Figur 13; Ausgangsposition der Greifer 58, 60 gestrichelt dargestellt).

Zur Detektion der Ecken E sind beide Greifer 58, 60 mit einem entsprechenden Sensor, insbesondere einem optischen Sensor 92, 94, ausgestattet.

In dieser Relativstellung des zweiten Greifers 58 und des dritten Greifers 60 gegenüber dem Flächenwerkstück 12 wird in der Positionierungsvorrichtung 10, die mit der Handhabungsbaugruppe 54 ausgestattet ist, die Handhabungsbaugruppe 54 mittels des Rotationsantriebs 76 in Richtung des Förderbandes 16 verschwenkt und das Flächenwerkstück 12 auf diesem flächig abgelegt, indem die Greifer 58, 60 geöffnet werden und somit das Flächenwerkstück 12 freigeben.

In der Variante der Positionierungsvorrichtung 10, die den zweiten Manipulator 54a und den dritten Manipulator 54b umfasst, wird mittels der Manipulatoren 54a, 54b eine entsprechende Bewegung der Greifer 58, 60 realisiert, um das Flächenwerkstück 12 flächig abzulegen.

Die beschriebenen Verfahrbewegungen der Greifer 58, 60 können begünstigt werden, wenn die gegriffene Kante K des Flächenwerkstücks 12 mit einem Saum versehen ist, der eine Verdickung am Rand des Flächenwerkstücks 12 umfasst. Eine derartige Verdickung verhindert das Herausrutschen aus den Greifern 58, 60, erlaubt jedoch das Verfahren der Greifer 58, 60 relativ zur Kante K.

In einer Variante des Verfahrens werden die Greifer 58, 60 nicht gleichzeitig relativ zum Flächenwerkstück bewegt, sondern nacheinander. Es wird also das Flächenwerkstück 12 zunächst mittels eines der Greifer 58, 60 gehalten, dessen Greifkraft nicht reduziert ist. Der jeweils andere Greifer 58, 60 wird dann mittels der Linearantriebseinheit 56 verfahren bis er an einer zugeordneten Ecke E angelangt.

Danach wird das Flächenwerkstück 12 mittels des an der Ecke E angelangten Greifers 58, 60 gehalten, dessen Greifkraft dann nicht mehr reduziert ist. Es wird entsprechend der andere Greifer 58, 60 verfahren bis er an der anderen Ecke E angelangt.

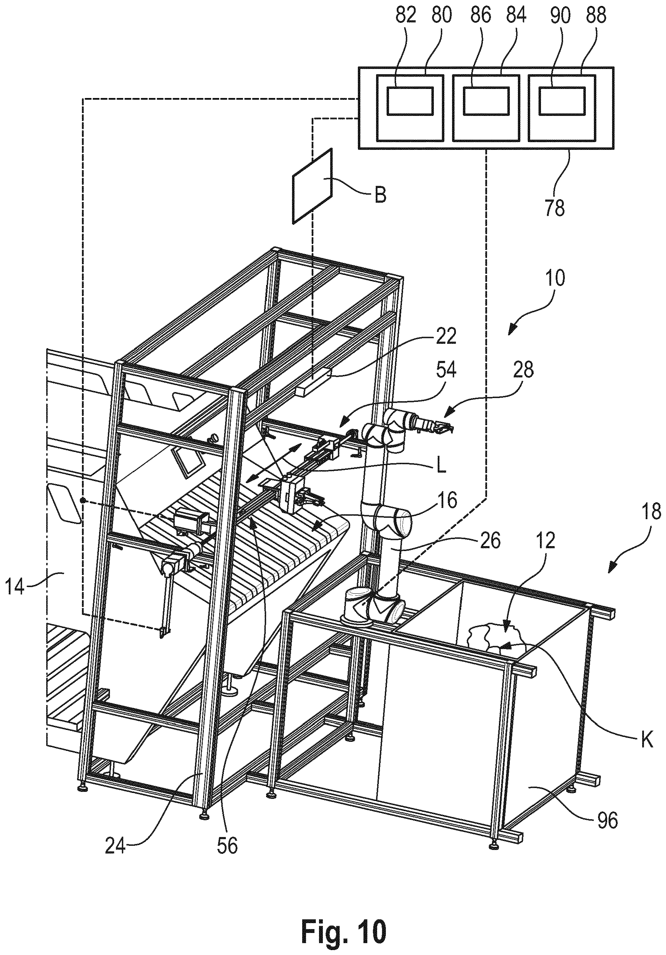

In Figur 10 ist eine Positionierungsvorrichtung 10 gemäß einer zweiten Ausführungsform dargestellt.

Dabei wird im Folgenden lediglich auf die Unterschiede gegenüber der ersten, in den Figuren 1 bis 9 dargestellten Ausführungsform eingegangen.

Gleiche oder einander entsprechende Elemente der Positionierungsvorrichtung 10 werden zudem mit denselben Bezugszeichen versehen.

In der zweiten Ausführungsform umfasst der Bereitstellungsbereich 18 anstelle der Manipulationsfläche 20 ein Bereitstellungsbehältnis 96. In diesem werden eines oder mehrere biegeschlaffe Flächenwerkstück 12 bereitgestellt, wobei in der Figur 10 lediglich ein einziges Flächenwerkstück 12 exemplarisch dargestellt ist.

Dabei ist die Kamera 22 wieder derart ausgebildet und angeordnet, dass sie ein Kamerabild des Flächenwerkstücks 12 im Bereitstellungsbehältnis 96 erzeugen kann.

Das Verfahren zur Positionierung des biegeschlaffen Flächenwerkstücks 12 läuft entsprechend zur ersten Ausführungsform ab. Das gilt sowohl für die Variante mit der Handhabungsbaugruppe 54 als auch für die Variante mit dem zweiten Manipulator 54a und dem dritten Manipulator 54b. Lediglich wird das Flächenwerkstück 12 aus dem Bereitstellungsbehältnis 96 gegriffen anstatt von der Manipulationsfläche 20.

Figur 11 zeigt eine dritte Ausführungsform der Positionierungsvorrichtung 10. Dabei wird lediglich auf die Unterschiede gegenüber der ersten und der zweiten Ausführungsform eingegangen.

Gleiche oder einander entsprechende Elemente der Positionierungsvorrichtung 10 werden mit denselben Bezugszeichen versehen.

Der Bereitstellungsbereich 18 der Positionierungsvorrichtung 10 umfasst nun sowohl eine Manipulationsfläche 20 als auch ein Bereitstellungsbehältnis 96. Die dritte Ausführungsform ist in dieser Hinsicht eine Kombination der ersten Ausführungsform und der zweiten Ausführungsform.

Ferner ist ein Bereitstellungsmanipulator 98 vorgesehen, der in der Figur 11 lediglich schematisch dargestellt und als Industrieroboter ausgeführt ist.

Am Bereitstellungsmanipulator 98 ist ein Bereitstellungsgreifer 100 montiert.

Dabei wird mittels des Bereitstellungsmanipulators 98 und des Bereitstellungsgreifers 100 ein biegeschlaffes Flächenwerkstück 12 aus dem Bereitstellungsbehältnis 96 auf die Manipulationsfläche 20 transferiert. Zu diesem Zweck sind der Bereitstellungsmanipulator 98 und der Bereitstellungsgreifer 100 mit der Steuereinheit 78 gekoppelt.

Ausgehend von einem Zustand, in dem das Flächenwerkstück 12 auf der Manipulationsfläche 20 liegt, läuft das Verfahren zur Positionierung des biegeschlaffen Flächenwerkstücks 12 wie in der ersten Ausführungsform ab. Das gilt wieder für beide Varianten der ersten Ausführungsform.

## Patentansprüche

1. Positionierungsvorrichtung (10) zur Positionierung eines biegeschlaffen Flächenwerkstücks (12), mit
einem Bereitstellungsbereich (18) zur Bereitstellung des zu positionierenden biegeschlaffen Flächenwerkstücks (12),
einer Kamera (22), die dazu angeordnet und ausgebildet ist, ein Kamerabild (B) des zu positionierenden biegeschlaffen Flächenwerkstücks (12), das im Bereitstellungsbereich (18) ist, zu erzeugen,
einem ersten Manipulator (26), der einen ersten Greifer (28) trägt, der dazu ausgebildet ist, zumindest einen Abschnitt des biegeschlaffen Flächenwerkstücks (12) aus dem Bereitstellungsbereich (18) zu greifen,
einem zweiten Greifer (58) und
einem dritten Greifer (60),
wobei der zweite Greifer (58) und der dritte Greifer (60) jeweils dazu ausgebildet sind, zumindest einen Abschnitt des biegeschlaffen Flächenwerkstücks (12) vom ersten Greifer (28) zu übernehmen, und wobei
• der zweite Greifer (58) und der dritte Greifer (60) antriebsmäßig mit einer Linearantriebseinheit (56) gekoppelt sind, sodass der zweite Greifer (58) und der dritte Greifer (60) jeweils entlang der Linearantriebseinheit (56) verfahrbar sind, oder
• der zweite Greifer (58) von einem zweiten Manipulator (54a) getragen ist und der dritte Greifer (60) von einem dritten Manipulator (54b) getragen ist.
**dadurch gekennzeichnet, dass**
der erste Greifer (28) zwei Greifbackenpaare (30, 36) umfasst, wobei zwischen den beiden Greifbackenpaaren (30, 36) ein Freiraum (44) vorgesehen ist, und wobei der Freiraum (44) so dimensioniert ist, dass er zumindest einen Abschnitt des zweiten Greifers (58) und zumindest einen Abschnitt des dritten Greifers (60) aufnehmen kann, wenn der zweite Greifer (58) und der dritte Greifer (60) mit einem Minimalabstand und/oder in ihrer Ausgangsposition angeordnet sind.

2. Positionierungsvorrichtung (10) nach Anspruch 1, **dadurch gekennzeichnet, dass** die Linearantriebseinheit (56) zusammen mit dem zweiten Greifer (58) und dem dritten Greifer (60) um eine parallel zu ihrer Längserstreckung (L) verlaufende Achse rotierbar in der Positionierungsvorrichtung (10) gelagert ist.

3. Positionierungsvorrichtung (10) nach Anspruch 1 oder 2, **dadurch gekennzeichnet, dass** der Bereitstellungsbereich (18) eine Manipulationsfläche (20) zur Bereitstellung des biegeschlaffen Flächenwerkstücks (12) umfasst.

4. Positionierungsvorrichtung (10) nach einem der vorhergehenden Ansprüche, **dadurch gekennzeichnet, dass** der Bereitstellungsbereich (18) ein Bereitstellungsbehältnis (96) umfasst, in dem eines oder mehrere biegeschlaffe Flächenwerkstücke (12) bereitstellbar sind.

5. Positionierungsvorrichtung (10) nach Anspruch 3 und 4, **gekennzeichnet durch** einen Bereitstellungsmanipulator (98) mit einem Bereitstellungsgreifer (100), wobei der Bereitstellungsmanipulator (98) dazu ausgebildet ist, vom Bereitstellungsbehältnis (96) bereitgestellte Flächenwerkstücke (12) auf die Manipulationsfläche (20) zu transferieren.

6. Positionierungsvorrichtung (10) nach einem der vorhergehenden Ansprüche, **dadurch gekennzeichnet, dass** eine Steuereinheit (78) vorgesehen ist, die
ein erstes Maschinenlernmodul (80) umfasst, das dazu ausgebildet ist, ausgehend von einem von der Kamera (22) erzeugten Kamerabild (B) des biegeschlaffen Flächenwerkstücks (12) eine greifbare Kante (K) des Flächenwerkstücks (12) zu ermitteln, und/oder
ein zweites Maschinenlernmodul (84) umfasst, das dazu ausgebildet ist, ausgehend von einem von der Kamera (22) erzeugten Kamerabild (B) des biegeschlaffen Flächenwerkstücks (12) einen Greifpunkt für den ersten Greifer (28) festzulegen, und/oder
ein drittes Maschinenlernmodul (88) umfasst, das dazu ausgebildet ist, ausgehend von einem von der Kamera (22) erzeugten Kamerabild (B) des biegeschlaffen Flächenwerkstücks (12) einen Typ des biegeschlaffen Flächenwerkstücks (12) zu ermitteln.

7. Verfahren zur Positionierung eines biegeschlaffen Flächenwerkstücks (12), insbesondere mittels einer Positionierungsvorrichtung (10) nach einem der vorhergehenden Ansprüche, wobei das Verfahren die folgenden Schritte umfasst:
a) Bereitstellen des Flächenwerkstücks (12) in einem Bereitstellungsbereich (18), wobei das Flächenwerkstück (12) einen zufälligen Zustand einnimmt,
b) Greifen einer Kante (K) des Flächenwerkstücks (12) mittels eines ersten Greifers (28),
c) Übergeben des Flächenwerkstücks (12) vom ersten Greifer (28) an einen zweiten Greifer (58) und einen dritten Greifer (60), sodass der zweite Greifer (58) und der dritte Greifer (60) die Kante (K) des Flächenwerkstücks (12) greifen, und
d) flächiges Ablegen des Flächenwerkstücks (12) mittels des zweiten Greifers (58) und des dritten Greifers (60).

8. Verfahren nach Anspruch 7, **dadurch gekennzeichnet, dass**
ein Kamerabild (B) durch eine Kamera (22) erzeugt wird, das das im Bereitstellungsbereich (18) vorhandene Flächenwerkstück (12) zeigt,
das Kamerabild (B) an ein erstes Maschinenlernmodul (80) der Steuereinheit (78) übertragen wird, und
das erste Maschinenlernmodul (80) die Lage der Kante (K) des Flächenwerkstücks (12) anhand des Kamerabilds (B) ermittelt.

9. Verfahren nach Anspruch 8, **dadurch gekennzeichnet, dass** zur Ermittlung der Lage der Kante (K) das Kamerabild (B) in eine Mehrzahl an Teilbildern unterteilt wird, insbesondere durch die Steuereinheit (78), und für jedes Teilbild durch das erste Maschinenlernmodul (80) der Steuereinheit (78) charakteristische Bildmerkmale extrahiert werden und anhand der charakteristischen Bildmerkmale für jedes Teilbild eine Wahrscheinlichkeit ermittelt wird, mit der es eine Kante (K) des Flächenwerkstücks (12) zeigt, insbesondere wobei für jedes Teilbild Wahrscheinlichkeiten ermittelt werden, mit denen es einer von mehreren vordefinierten Kategorien angehört.

10. Verfahren nach Anspruch 8 oder 9, **dadurch gekennzeichnet,**
**dass** das Kamerabild (B) oder zumindest ein Teilbild des Kamerabilds (B) an ein zweites Maschinenlernmodul (84) der Steuereinheit (78) übertragen wird, und
**dass** das zweite Maschinenlernmodul (84) anhand des Kamerabilds (B) oder des Teilbilds des Kamerabilds (B) einen Greifpunkt für den ersten Greifer (28) ermittelt.

11. Verfahren nach einem der Ansprüche 7 bis 10, **dadurch gekennzeichnet, dass** zum Übergeben des Flächenwerkstücks (12) vom ersten Greifer (28) an den zweiten Greifer (58) und den dritten Greifer (60) der zweite Greifer (58) und der dritte Greifer (60) im Wesentlichen gleichzeitig einen in einem Freiraum (44) zwischen zwei Greifbackenpaaren (30, 36) des ersten Greifers (28) liegenden Abschnitt der Kante (K) greifen.

12. Verfahren nach einem der Ansprüche 7 bis 11, **dadurch gekennzeichnet,**
**dass** nach dem Übergeben des Flächenwerkstücks (12) an den zweiten Greifer (58) und den dritten Greifer (60) das Flächenwerkstück (12) mit dem zweiten Greifer (58) gehalten wird und der dritte Greifer (60) vom zweiten Greifer (58) wegbewegt wird bis der dritte Greifer (60) an einer ersten Ecke (E) des Flächenwerkstücks (12) angelangt ist, oder
**dass** nach dem Übergeben des Flächenwerkstücks (12) an den zweiten Greifer (58) und den dritten Greifer (60) das Flächenwerkstück (12) mit dem dritten Greifer (60) gehalten wird und der zweite Greifer (58) vom dritten Greifer (60) wegbewegt wird bis der zweite Greifer (58) an einer zweiten Ecke (E) des Flächenwerkstücks (12) angelangt ist, oder
**dass** nach dem Übergeben des Flächenwerkstücks (12) an den zweiten Greifer (58) und den dritten Greifer (60) der zweite Greifer (58) und der dritte Greifer (60) gleichzeitig voneinander wegbewegt werden bis der dritte Greifer (60) an einer ersten Ecke (E) des Flächenwerkstücks (12) angelangt ist und der zweite Greifer (58) an einer zweiten Ecke (E) des Flächenwerkstücks (12) angelangt ist.

13. Verfahren nach Anspruch 12, **dadurch gekennzeichnet,**
**dass** zum Wegbewegen des zweiten Greifers (58) vom dritten Greifer (60) und/oder zum Wegebewegen des dritten Greifers (60) vom zweiten Greifer (58) eine Greifkraft des zweiten Greifers (58) und/oder des dritten Greifers (60) im Vergleich zu einem vordefinierten Ausgangsgreifzustand reduziert wird oder
**dass** zum Wegbewegen des zweiten Greifers (58) vom dritten Greifer (60) und/oder zum Wegbewegen des dritten Greifers (60) vom zweiten Greifer (58) der zweite Greifer (58) und/oder der dritte Greifer (60) um einen vorgegebenen Betrag geöffnet wird bzw. werden.

## Claims

1. A positioning device (10) for positioning a limp flat workpiece (12), comprising
a provisioning area (18) for providing the limp flat workpiece (12) to be positioned;
a camera (22) which is arranged and configured to generate a camera image (B) of the limp flat workpiece (12) which is to be positioned and which is located in the provisioning area (18);
a first manipulator (26) which carries a first gripper (28) configured to grip at least a portion of the limp flat workpiece (12) from the provisioning area (18);
a second gripper (58); and
a third gripper (60),
wherein the second gripper (58) and the third gripper (60) are each configured to take over at least a portion of the limp flat workpiece (12) from the first gripper (28), and wherein
• the second gripper (58) and the third gripper (60) are drivingly coupled to a linear drive unit (56), so that the second gripper (58) and the third gripper (60) are each movable along the linear drive unit (56), or
• the second gripper (58) is carried by a second manipulator (54a) and the third gripper (60) is carried by a third manipulator (54b),
**characterized in that** the first gripper (28) comprises two gripper jaw pairs (30, 36), wherein a free space (44) is provided between the two gripper jaw pairs (30, 36), and wherein the free space (44) is dimensioned such that it can receive at least a portion of the second gripper (58) and at least a portion of the third gripper (60) when the second gripper (58) and the third gripper (60) are arranged at a minimum distance and/or in their initial positions.

2. The positioning device (10) according to claim 1, **characterized in that** the linear drive unit (56) together with the second gripper (58) and the third gripper (60) is mounted in the positioning device (10) so as to be rotatable about an axis extending parallel to its longitudinal extent (L).

3. The positioning device (10) according to claim 1 or 2, **characterized in that** the provisioning area (18) comprises a manipulation surface (20) for providing the limp flat workpiece (12).

4. The positioning device (10) according to any of the preceding claims, **characterized in that** the provisioning area (18) comprises a provisioning container (96) in which one or more limp flat workpieces (12) can be provided.

5. The positioning device (10) according to claim 3 and 4, **characterized by** a provisioning manipulator (98) having a provisioning gripper (100), wherein the provisioning manipulator (98) is configured to transfer flat workpieces (12) provided by the provisioning container (96) onto the manipulation surface (20).

6. The positioning device (10) according to any of the preceding claims, **characterized in that** a control unit (78) is provided, which comprises
a first machine learning module (80) which is adapted to identify a grippable edge (K) of the limp flat workpiece (12) on the basis of a camera image (B), generated by the camera (22), of the flat workpiece (12), and/or
a second machine learning module (84) which is adapted to determine a gripping point for the first gripper (28) on the basis of a camera image (B), generated by the camera (22), of the limp flat workpiece (12), and/or
a third machine learning module (88) which is adapted to identify a type of the limp flat workpiece (12) on the basis of a camera image (B), generated by the camera (22), of the limp flat workpiece (12).

7. A method of positioning a limp flat workpiece (12), in particular by means of a positioning device (10) according to any of the preceding claims, the method comprising the steps of:
a) providing the flat workpiece (12) in a provisioning area (18), the flat workpiece (12) assuming a random state;
b) gripping an edge (K) of the flat workpiece (12) by means of a first gripper (28);
c) transferring the flat workpiece (12) from the first gripper (28) to a second gripper (58) and a third gripper (60) so that the second gripper (58) and the third gripper (60) grip the edge (K) of the flat workpiece (12); and
d) depositing the flat workpiece (12) in a flat condition by means of the second gripper (58) and the third gripper (60).

8. The method according to claim 7, **characterized in that**
a camera image (B) which shows the flat workpiece (12) located in the provisioning area (18) is generated by a camera (22);
the camera image (B) is transmitted to a first machine learning module (80) of the control unit (78); and
the first machine learning module (80) identifies the position of the edge (K) of the flat workpiece (12) based on the camera image (B).

9. The method according to claim 8, **characterized in that** for identifying the position of the edge (K), the camera image (B) is subdivided into a plurality of partial images, in particular by the control unit (78), and characteristic image features are extracted by the first machine learning module (80) of the control unit (78) for each partial image and, based on the characteristic image features, for each partial image a probability is established with which it shows an edge (K) of the flat workpiece (12), in particular wherein, for each partial image, probabilities are established with which it belongs to one of a plurality of predefined categories.

10. The method according to claim 8 or 9, **characterized in that**
the camera image (B) or at least a partial image of the camera image (B) is transmitted to a second machine learning module (84) of the control unit (78), and
the second machine learning module (84) identifies a gripping point for the first gripper (28) on the basis of the camera image (B) or the partial image of the camera image (B).

11. The method according to any of claims 7 to 10, **characterized in that** for transferring the flat workpiece (12) from the first gripper (28) to the second gripper (58) and the third gripper (60), the second gripper (58) and the third gripper (60) substantially simultaneously grip a portion of the edge (K) located in a free space (44) between two gripper jaw pairs (30, 36) of the first gripper (28).

12. The method according to any of claims 7 to 11, **characterized in that**
after transferring the flat workpiece (12) to the second gripper (58) and the third gripper (60), the flat workpiece (12) is held using the second gripper (58) and the third gripper (60) is moved away from the second gripper (58) until the third gripper (60) has reached a first corner (E) of the flat workpiece (12), or
after transferring the flat workpiece (12) to the second gripper (58) and the third gripper (60), the flat workpiece (12) is held using the third gripper (60) and the second gripper (58) is moved away from the third gripper (60) until the second gripper (58) has reached a second corner (E) of the flat workpiece (12), or
after transferring the flat workpiece (12) to the second gripper (58) and the third gripper (60), the second gripper (58) and the third gripper (60) are simultaneously moved away from each other until the third gripper (60) has reached a first corner (E) of the flat workpiece (12) and the second gripper (58) has reached a second corner (E) of the flat workpiece (12).

13. The method according to claim 12, **characterized in that**
for moving the second gripper (58) away from the third gripper (60) and/or for moving the third gripper (60) away from the second gripper (58), a gripping force of the second gripper (58) and/or of the third gripper (60) is reduced compared with a predefined initial gripping state, or
for moving the second gripper (58) away from the third gripper (60) and/or for moving the third gripper (60) away from the second gripper (58), the second gripper (58) and/or the third gripper (60) is/are opened by a specified amount.

## Revendications

1. Dispositif de positionnement (10) pour le positionnement d'une pièce à usiner plane (12) souple en flexion, comprenant
une zone de fourniture (18) pour la fourniture de la pièce à usiner plane (12) souple en flexion à positionner,
une caméra (22) qui est agencée et réalisée de manière à générer une image de caméra (B) de la pièce à usiner plane (12) souple en flexion à positionner se trouvant dans la zone de fourniture (18),
un premier manipulateur (26) qui porte un premier préhenseur (28) réalisé pour saisir au moins une partie de la pièce à usiner plane (12) souple en flexion dans la zone de fourniture (18),
un deuxième préhenseur (58), et
un troisième préhenseur (60),
le deuxième préhenseur (58) et le troisième préhenseur (60) étant chacun réalisés de manière à prendre en charge au moins une partie de la pièce à usiner plane (12) souple en flexion du premier préhenseur (28), et
• le deuxième préhenseur (58) et le troisième préhenseur (60) étant couplés, en termes d'entraînement, à une unité d'entraînement linéaire (56), de sorte que le deuxième préhenseur (58) et le troisième préhenseur (60) sont chacun déplaçables le long de l'unité d'entraînement linéaire (56), ou
• le deuxième préhenseur (58) étant porté par un deuxième manipulateur (54a), et le troisième préhenseur (60) étant porté par un troisième manipulateur (54b),
**caractérisé en ce que** le premier préhenseur (28) comprend deux paires de mâchoires de préhension (30, 36), un espace libre (44) étant prévu entre les deux paires de mâchoires de préhension (30, 36), et l'espace libre (44) étant dimensionné de manière à pouvoir recevoir au moins une partie du deuxième préhenseur (58) et au moins une partie du troisième préhenseur (60) lorsque le deuxième préhenseur (58) et le troisième préhenseur (60) sont agencés à une distance minimale et/ou dans leur position initiale.

2. Dispositif de positionnement (10) selon la revendication 1, **caractérisé en ce que** l'unité d'entraînement linéaire (56) est agencée, ensemble avec le deuxième préhenseur (58) et le troisième préhenseur (60), dans le dispositif de positionnement (10) de manière mobile en rotation autour d'un axe parallèle à son extension longitudinale (L).

3. Dispositif de positionnement (10) selon la revendication 1 ou 2, **caractérisé en ce que** la zone de fourniture (18) comprend une surface de manipulation (20) pour la fourniture de la pièce à usiner plane (12) souple en flexion.

4. Dispositif de positionnement (10) selon l'une des revendications précédentes, **caractérisé en ce que** la zone de fourniture (18) comprend un réceptacle de fourniture (96) dans lequel une ou plusieurs pièces à usiner planes (12) souples en flexion peuvent être fournies.

5. Dispositif de positionnement (10) selon la revendication 3 et 4, **caractérisé par** un manipulateur de fourniture (98) comprenant un préhenseur de fourniture (100), le manipulateur de fourniture (98) étant réalisé de manière à transférer des pièces à usiner planes (12) fournies par le réceptacle de fourniture (96) sur la surface de manipulation (20).

6. Dispositif de positionnement (10) selon l'une des revendications précédentes, **caractérisé en ce qu'**il est prévu une unité de commande (78) qui
comprend un premier module d'apprentissage automatique (80) réalisé de manière à déterminer une arête saisissable (K) de la pièce à usinier plane (12) à partir d'une image de caméra (B) de la pièce à usiner plane (12) souple en flexion générée par la caméra (22), et/ou
comprend un deuxième module d'apprentissage automatique (84) réalisé de manière à définir un point de préhension pour le premier préhenseur (28) à partir d'une image de caméra (B) de la pièce à usiner plane (12) souple en flexion générée par la caméra (22), et/ou
comprend un troisième module d'apprentissage automatique (88) réalisé de manière à déterminer un type de la pièce à usiner plane (12) souple en flexion à partir d'une image de caméra (B) de la pièce à usiner plane (12) souple en flexion générée par la caméra (22).

7. Procédé de positionnement d'une pièce à usiner plane (12) souple en flexion, en particulier au moyen d'un dispositif de positionnement (10) selon l'une des revendications précédentes, le procédé comprenant les étapes suivantes :
a) la fourniture de la pièce à usiner plane (12) dans une zone de fourniture (18), la pièce à usiner plane (12) prenant un état aléatoire,
b) la préhension d'une arête (K) de la pièce à usiner plane (12) au moyen d'un premier préhenseur (28),
c) le transfert de la pièce à usiner plane (12) du premier préhenseur (28) à un deuxième préhenseur (58) et un troisième préhenseur (60) de sorte que le deuxième préhenseur (58) et le troisième préhenseur (60) saisissent l'arête (K) de la pièce à usiner plane (12), et
d) le dépôt à plat de la pièce à usiner plane (12) au moyen du deuxième préhenseur (58) et du troisième préhenseur (60).

8. Procédé selon la revendication 7, **caractérisé en ce que**
une caméra (22) génère une image de caméra (B) montrant la pièce à usiner plane (12) se trouvant dans la zone de fourniture (18),
l'image de caméra (B) est transmise à un premier module d'apprentissage automatique (80) de l'unité de commande (78), et
le premier module d'apprentissage automatique (80) détermine la position de l'arête (K) de la pièce à usiner plane (12) sur la base de l'image de caméra (B).

9. Procédé selon la revendication 8, **caractérisé en ce que** pour la détermination de la positon de l'arête (K), l'image de caméra (B) est divisée en une pluralité d'images partielles, en particulier par l'unité de commande (78), et des propriétés d'image caractéristiques sont extraites par le premier module d'apprentissage automatique (80) de l'unité de commande (78) pour chaque image partielle, et une probabilité est déterminée pour chaque image partielle sur la base des propriétés d'image caractéristiques, avec laquelle elle montre une arête (K) de la pièce à usiner plane (12), des probabilités étant en particulier déterminées pour chaque image partielle, avec lesquelles elle appartient à l'une parmi une pluralité de catégories prédéfinies.

10. Procédé selon la revendication 8 ou 9, **caractérisé en ce que**
l'image de caméra (B) ou au moins une image partielle de l'image de caméra (B) est transmise à un deuxième module d'apprentissage automatique (84) de l'unité de commande (78), et
**en ce que** le deuxième module d'apprentissage automatique (84) détermine une point de préhension pour le premier préhenseur (28) sur la base de l'image de caméra (B) ou de l'image partielle de l'image de caméra (B).

11. Procédé selon l'une des revendications 7 à 10, **caractérisé en ce que** pour le transfert de la pièce à usiner plane (12) du premier préhenseur (28) au deuxième préhenseur (58) et au troisième préhenseur (60), le deuxième préhenseur (58) et le troisième préhenseur (60) saisissent sensiblement simultanément une partie de l'arête (K) se trouvant dans un espace libre (44) entre deux paires de mâchoires de préhension (30, 36) du premier préhenseur (28).

12. Procédé selon l'une des revendications 7 à 11, **caractérisé en ce que**
après le transfert de la pièce à usiner plane (12) au deuxième préhenseur (58) et au troisième préhenseur (60), la pièce à usiner plane (12) est retenue par le deuxième préhenseur (58), et le troisième préhenseur (60) est déplacé en éloignement du deuxième préhenseur (58) jusqu'à ce que le troisième préhenseur (60) arrive à un premier coin (E) de la pièce à usiner plane (12), ou
après le transfert de la pièce à usiner plane (12) au deuxième préhenseur (58) et au troisième préhenseur (60), la pièce à usiner plane (12) est retenue par le troisième préhenseur (60), et le deuxième préhenseur (58) est déplacé en éloignement du troisième préhenseur (60) jusqu'à ce que le deuxième préhenseur (58) arrive à un deuxième coin (E) de la pièce à usiner plane (12), ou
après le transfert de la pièce à usiner plane (12) au deuxième préhenseur (58) et au troisième préhenseur (60), le deuxième préhenseur (58) et le troisième préhenseur (60) sont simultanément déplacés en éloignement l'un de l'autre jusqu'à ce que le troisième préhenseur (60) arrive à un premier coin (E) de la pièce à usiner plane (12) et le deuxième préhenseur (58) arrive à un deuxième coin (E) de la pièce à usiner plane (12).

13. Procédé selon la revendication 12, **caractérisé en ce que**
pour le déplacement du deuxième préhenseur (58) en éloignement du troisième préhenseur (60) et/ou pour le déplacement du troisième préhenseur (60) en éloignement du deuxième préhenseur (58), une force de préhension du deuxième préhenseur (58) et/ou du troisième préhenseur (60) est réduite par rapport à un état de préhension initial prédéfini, ou
pour le déplacement du deuxième préhenseur (58) en éloignement du troisième préhenseur (60) et/ou pour le déplacement du troisième préhenseur (60) en éloignement du deuxième préhenseur (58), le deuxième préhenseur (58) et/ou le troisième préhenseur (60) est/sont ouvert(s) selon une valeur prédéterminée.
